# EUROPÄISCHE PATENTSCHRIFT

(11) **EP 4 200 552 B1**
(45) Veröffentlichungstag und Bekanntmachung des Hinweises auf die Patenterteilung: **29.11.2023**
(21) Anmeldenummer: 21839383.3
(22) Anmeldetag: 13.12.2021
(51) Int. Cl.: F16L 23/024, F28G 7/00

(54) **SCHLAGZYLINDERHALTEANORDNUNG UMFASSEND EINEN SCHLAGZYLINDER UND EINEN MIT EINEM TRÄGERKÖRPER VERBUNDENER HALTEFLANSCH**
IMPACT CYLINDER HOLDING ASSEMBLY COMPRISING AN IMPACT CYLINDER AND A HOLDING FLANGE CONNECTED TO A SUPPORT BODY
ENSEMBLE DE MAINTIEN DE CYLINDRE D'IMPACT COMPRENANT UN CYLINDRE D'IMPACT ET UNE BRIDE DE MAINTIEN RELIÉE À UN CORPS DE SUPPORT

(30) Priorität: 18.12.2020 DE 102020134265
(43) Veröffentlichungstag der Anmeldung: 28.06.2023
(73) Patentinhaber: Rosink-Werkstätten GmbH, 48529 Nordhorn (DE)
(72) Erfinder: KRÜHSEL, Michael, 49744 Geeste (DE); TEBBEL, Matthias, 48531 Nordhorn (DE)
(74) Vertreter: Bobzien, Hans Christoph
(86) Internationale Anmeldenummer: PCT/EP2021/085427
(87) Internationale Veröffentlichungsnummer: WO 2022/128883

(56) Entgegenhaltungen:
- EP-A1- 0 759 487
- WO-A1-2010/063755
- WO-A1-2012/069702
- DE-A1-102009 051 089
- DE-C1- 19 851 268
- US-A- 2 973 233

## Beschreibung

Die Erfindung betrifft eine Schlagzylinderanordnung umfassend einen Schlagzylinder, einen Halteflansch, verbunden mit einem Trägerkörper, insbesondere einem Kessel oder dergleichen.

Daneben betrifft die Erfindung eine Anschlussplatte zur lösbaren Verbindung eines Schlagzylinders an einem Halteflansch, der mit einem Trägerkörper verbunden ist.

### Stand der Technik

Der Schlagzylinder umfasst eine an einem Vorderende angeordnete Schlagzylindervorderplatte, einem zylindrischen Kolbenmantel, der sich von der Schlagzylindervorderplatte am dem Vorderende zu einem Hinterende erstreckt und eine innere Kolbenkammer umfänglich umschließt. Die im Außendurchmesser an den Kolbenmantel angepasste Schlagzylindervorderplatte und die Schlagzylinderhinterplatte verschließen den Schlagzylinder also am Vorder- und am Hinterende. In der Kolbenkammer ist ein Kolben entlang einer Schlagzylinderlängsachse längsverschieblich zwischen einer hinteren Ruheposition und einer vorderen Schlagposition relativbeweglich geführt. In der Schlagzylindervorderplatte ist ein Schlagbolzen oder eine einer Schlagstange relativbeweglich aufgenommenen, auf welche der Kolben in der vorderen Schlagposition aufschlägt. Über einen Anschluss wird ein Fluid, insbesondere von Druckluft, zugeführt und ein Ventil schaltetet wahlweise zum dem Befüllen eines Druckluftspeichers und einer Schlagauslösung des Kolbens um.

Ein solcher Schlagzylinder wird beispielsweise zum Entfernen von Rauchgasrückständen an Rauchgasreinigungsanlagen eingesetzt, wozu der Schlagzylinder außenseitig auf einem als Rauchgaskanal ausgebildeten Trägerkörper angeordnet wird und der Schlagzylinder mit seiner Schlagstange oder seinem Amboss Schläge auf die Außenseite des Rauchgaskanals ausführt, um somit abgesetzte Beläge von der Innenseite abzulösen, welche den Wirkungsgrad von Anlagen erheblich reduzieren.

DE 33 24 456 A1, EP 0 759 487 A1 oder DE 10 2009 051 089 offenbaren eine Schlagzylinderanordnung gemäß dem Oberbegriff der unabhängigen Ansprüche. Weiterer Stand der Technik ist bekannt aus WO 2010 063 755 A1 , WO 2012 069 702 A1, DE 198 51 28 C1 sowie US 2,973,233

### Nachteile am Stand der Technik

An dem Trägerkörper können Hunderte solcher Schlagzylinder auf Flanschen in Reihen neben- und übereinander montiert sein zur Bildung von Schlagzylindergebilden. Dabei sind die Schlagzylinder üblicherweise nur von der hinteren, also der von dem Trägerkörper abgewandten Seite für den Monteur zugänglich. Ein Schlagzylinder wiegt ca. 25 Kilo und zwischen den Schlagzylindern in einer Reihe von neben- und übereinander angeordneter Schlagzylinder existiert mitunter nur eine 46 mm breite Lücke nach oben, nach unten und zur Seite hin.

Zur Befestigung an dem Halteflansch sind in der Schlagzylindervorderplatte sind in der durch diese definierte Vorderplattenebene hindurch erstreckende Bolzen oder Schrauben angeordnet, die sich also parallel versetzt von der mittleren Schlagzylinderlängsachse um diese herum nach vorne erstreckend angeordnet sind und in korrespondierende Öffnungen des vorzugsweise an die Größe, also den Außendurchmesser der Schlagzylindervorderplatte angepassten Halteflansche mit entsprechenden Durchgangslöchern für die Bolzen hindurchführbar sind. Nach Durchstecken der Bolzen an der Schlagzylindervorderplatte durch die Durchgangslöcher des Halteflansches müssen auf die Gewindeenden der Bolzen, die durch die Durchgangslöcher des Halteflansches hindurchragen, rückseitig Muttern aufgeschraubt und befestigt werden. Üblicherweise wird jeder Schlagzylinder mit vier Muttern befestigt. Die Muttern befinden sich von der Bedienerseite des hinter dem Schlagzylinder stehenden Monteurs aus gesehen hinter dem Halteflansch und können von dem Monteur kaum gesehen werden und sind zudem auch schlecht zugänglich. Gleichzeitig müssen Schlagzylinder aber regelmäßig gewartet, geprüft und bei Störungen demontiert, repariert und ersetzt werden.

Die Montage von hunderten Schlagzylindern ist aufgrund des Gewichts eines einzelnen Schlagzylinders von 25 kg und mehr körperlich anstrengend. Je länger es dauert bis der Schlagzylinder sicher hängt, desto anstrengender ist die Montage und Reparaturarbeit.

Die Montage oder Wartung eines Schlagzylinders läuft beim Stand der Technik wie folgt ab:
- Heben und Hineinschieben des Schlagzylindervorderendes mit beiden Händen mit den darin angeordneten, nach vorne ragenden Bolzen in die vier korrespondierenden Durchgangslöcher oder Löcher des Halteflansches;
- Festhalten des Schlagzylinders mit einer Hand und Montage der ersten Mutter. Dieses Festhalten mit einer Hand muss solange erfolgen, bis die erste Mutter bis zum Anschlag manuell gedreht wurde. Dabei sind die Muttern von der Bedienerseite aus nicht sichtbar. Jede Mutter muss also quasi blind befestigt werden;
- Abschließend werden die drei letzten Muttern befestigt, ebenfalls ohne diese direkt zu sehen.

Beim Stand der Technik ist insbesondere bei der Anordnung von mehreren Schlagzylindern in Reihen neben und übereinander eine bestimmte Montagereihenfolge und Demontagereihenfolge einzuhalten. Zunächst müssen die äußeren oder unteren Schlagzylinder montiert oder demontiert werden. Nur dann sind die Muttern an den Flanschen mit den üblichen Werkzeugen seitlich zugänglich. Erst nach der Montage/Demontage eines angrenzenden Schlagzylinders, insbesondere eines unteren Schlagzylinders können die oberen und daneben gelegenen Schlagzylinder montiert/demontiert werden.

Die Demontage der Schlagzylinder bei einem Defekt oder einer Wartung muss ebenfalls in einer genau vorgegebenen Reihenfolge erfolgen. Möchte man z.B. einen einzelnen Schlagzylinder in der Mitte in einer unteren Reihe demontieren, muss man zunächst alle Schlagzylinder demontieren, die sich seitlich davon befinden. Alternativ können die zur anderen Seite gelegenen Schlagzylinder demontiert werden. Es muss dabei sowohl die obere als auch die untere Reihe demontiert werden, wenn mehrere übereinander angeordnete Reihen vorgesehen sind, was die Regel darstellt.

Da Klemmmuttern, also selbstkonternde Muttern eingesetzt werden, können diese nicht mit der Hand angezogen werden. Da relativ viele Umdrehungen der Mutter bis zum Festziehen notwendig sind, kommen Maulschlüssel nicht zum Einsatz. Akkubetriebene Schlagschrauber wären sehr hilfreich zum Andrehen der Muttern, können aber aufgrund der eingeschränkten Zugänglichkeit nicht eingesetzt werden. Somit werden beim Stand der Technik üblicherweise Umschaltknarren verwendet, welche seitlich aufgesetzt und dann ratschenartig betätigt werden.

Die Montage- /Reparaturzeit beträgt bei Verwendung von derartigen Knarren pro Schlagzylinder 10 Minuten länger als bei Verwendung eines Akkuschraubers. Insofern scheuen Service-Mitarbeiter und Wartungspersonal den Aufwand, einen defekten Schlagzylinder zu tauschen. Folglich wird eine Wartung von Klopfsystemen umfassend mehrere solcher Schlagzylinder in Reihen übereinander relativ ungerne durchgeführt, so dass Wartungszyklen nicht immer eingehalten werden. Dieses hat einen negativen Einfluss auf die Lebensdauer.

Ein weiterer Nachteil ist die Bauform des Schlagzylinders mit der zylindrischen Mantelfläche der Kolbenkammer, die eingefasst ist durch die üblicherweise an diese zylindrische Mantelfläche einfassende Schlagzylindervorder- und Schlagzylinderhinterplatte. Somit kann der zylindrische Schlagzylinder dadurch unkontrolliert rollen. Wird dieser auf einen Tisch gelegt, kann er rollen und herunterfallen, was aufgrund seines Gewichts zu Verletzungen führen kann.

### Aufgabe

Ausgehend von dem eingangs genannten Stand der Technik und der damit verbundenen Nachteile liegt der Erfindung somit die Aufgabe zugrunde, die genannten Nachteile zumindest teilweise zu vermeiden und insbesondere einen Schlagzylinderanordnung vorzusehen, die deutlich leichter montierbar ist und auch für die Wartung einfach demontiert werden kann.

### Erfindung

Erfindungsgemäß wird dieses bereits durch die Merkmale der unabhängigen Ansprüche gelöst. Vorteilhafte, aber nicht zwingende Merkmale sind in den Unteransprüchen wiedergegeben.

Abstrakt gesehen ist nunmehr an dem Schlagzylindervorderende mit einem Befestigungsabschnitt ausgebildet, der sich am Vorderende des Schlagzylinders über die stirnseitige Projektion des Schlagzylinders auf die Ebene vor dem Schlagzylinder flanschartig radial nach außen erstreckt und somit einen Bereich bereitstellt, in welchem Durchgangslöcher zum Hindurchführen des Schraubenschafts einer als Schraube ausgebildeten Bolzen ausgebildet sind. Dieser Flanschartige Befestigungsabschnitt kann insofern auch als Befestigungsflansch bezeichnet werden.

Als Bolzen zur Befestigung des Schlagzylinders an dem Halteflansch werden als Schrauben ausgebildete Bolzen eingesetzt, die einen Schraubenschaft mit einen Nenndurchmesser und einen Schraubenkopf mit einem gegenüber dem Nenndurchmesser vergrößerten Schraubenkopfdurchmesser aufweisen.

Ferner ist der Halteflansch ausgebildet zum Eindrehen der Schrauben. Vorzugsweise weist dieser dazu Gewindeöffnungen auf, die korrespondierend zu den Schrauben ausgebildet sind, in welche die durch die Durchgangslöcher im Befestigungsabschnitt durchgesteckte also eingedreht und angezogen werden können zur Endfixierung des Schlagzylinders an dem Halteflansch.

Durch diese Ausbildung kann nunmehr die Verschraubung der Schlagzylinder an der dem Monteur zugewandte Rückseite des Trägerflansches erfolgen, also mit einem hinter dem Schlagzylinder stehenden Monteur, der also Einblick und Zugang zu den Zylinderkopfschrauben hat.

Erfindungsgemäß müssen also keine Muttern mehr an der Rückseite des Halteflansches befestigt werden. Vielmehr umfasst der Halteflansch mit den Durchgangslöchern in Einbaulage korrespondierende Gewindeöffnungen, in welche die Schraubenschafte der Schrauben eindrehbar sind.

An der Stelle der üblichen Durchgangsbohrungen weist der Halteflansch somit die Gewindelöcher, in welche die Schrauben von der Betreiberseite her eingeschraubt werden können.

In der Ansicht des Monteurs von hinten auf den Schlagzylinder kann man erkennen, dass jede Schraube leicht zugänglich und sichtbar ist. Damit entfällt die zuvor notwendige, aufwendige Montagereihenfolge. Auch ist die Demontage von benachbarten Zylindern neben einem eigentlich defekten Schlagzylinder im Vergleich zum Stand der Technik nicht mehr erforderlich. Jeder Schlagzylinder kann somit auch in einer Reihe angeordnet einfach einzelnen ausgetauscht werden.

Als Werkzeug kann eine handelsübliche Kombination aus Akku-Schrauber, Vierkant-Verlängerung und Innensechskant-Bit-Steckschlüsseleinsatz benutzt werden. Jede Schraube ist damit von der Bedienerseite (Rückseite des Schlagzylinders) aus frei zugänglich und sichtbar.

Von besonderem Vorteil ist die Anordnung der Schrauben an den vier Ecken des Befestigungsabschnitts seitlich von der Schlagzylindervorderplatte, weil dieses eine möglichst geringe Größe des Befestigungsabschnitts ermöglicht. Würde man die Schrauben mittig auf den sich in den Querrichtungen auf der Schlagzylinderplatte erstreckende Achsen platzieren, wäre ein zusätzlicher Abstand zum nächstliegenden Schlagzylinder und damit mehr Bauraum erforderlich.

Die neue Ausgestaltung ermöglicht somit einen neuen Montage- und/oder Wartungsablauf. Insofern betrifft die Erfindung daneben auch ein Montage- und/oder Wartungsverfahren für einen Schlagzylinder, bei welchem ein an einem Halteflansch eines Trägerkörpers lösbar befestigbarer Schlagzylinder zunächst diesen haltende Schrauben zunächst leicht gelöst werden, also nicht vollständig ausgedreht werden, so dass der der Befestigungsabschnitt des betreffenden Schlagzylinders noch durch die Schrauben gehalten wird, die Schraubenköpfe an dem Befestigungsabschnitt anliegen, der Schlagzylinder sodann in einer Löserichtung um eine Schlagzylinderlängsachse gedreht wird, sodass die Schrauben oder Schraubenschäfte in Zuführungsabschnitten bzw. Führungsabschnitten des Befestigungsabschnitts oder einer mit der Schlagzylindervorderplatte montierten Befestigungsplatte angeordnet am Vorderende des Schlagzylinders entlang gleiten und schließlich Entfernen des betreffenden Schlagzylinders.

Nach dem Entfernen des defekten Schlagzylinders wird im nächsten Schritt ein neuer Schlagzylinder mit einem entsprechenden Befestigungsabschnitt oder einer entsprechenden Anschlussplatte versehender Schlagzylinder bzw. einem entsprechenden Anschlussbereich auf die Schrauben aufgesetzt werden und sodann in einer Befestigungsrichtung an dem Trägerkörper und dem an diesem befestigten Halteflansch vorfixiert werden durch Drehen des Schlagzylinders in einer Befestigungsrichtung. Das Endfixieren erfolgt durch Anziehen der vorzugsweise zuvor in dem Halteflansch zumindest teilweise eingedrehten Schrauben.

Im Gegensatz zu bisherigen Montageverfahren und Wartungsverfahren ist also nur der jeweils zu bearbeitende Schlagzylinder zu demontieren und zu montieren. Die um diese herum angeordneten Schlagzylinder in einem Schlagzylindergebilde umfassend mehrere in Reihen nebeneinander und auch übereinander angeordnete Schlagzylinder, entfällt. Durch die erfindungsgemäße Ausbildung des Schlagzylinders mit der vorzugsweise viereckigen, flanschartigen Anschlussplatte, wobei diese entweder einteilig an der Schlagzylindervorderplatte ausgebildet ist oder mit dieser verschraubt ist, was die bevorzugte Ausführungsform darstellt, wird die Dauer von Wartungszeiten erheblich reduziert, und zwar um 90 % und mehr im Vergleich zu früher.

Wird dieser Schlagzylinder oder diese Baugruppe bestehend aus Schlagzylinder mit Anschlussplatte z.B. auf einen Montagetisch gelegt, ist offensichtlich, dass diese aufgrund der eckigen Form der Anschlussplatte, welche über die äußere Mantelfläche des Vorderendes des Schlagzylinders hinausragt bzw. diesen umfasst, diese nicht mehr wegrollen kann.

Durch die erfindungsgemäße Ausgestaltung wird also der Schlagzylinder mit seiner Schlagzylindervorderplatte oder seinem Schlagzylindervorderteil auf den Halteflansch aufgesetzt und an diesem festgeschraubt, welcher die korrespondierenden Gewindelöcher zum Festschrauben der in den Durchgangslöcher des Befestigungsabschnitts eingesetzten Schauben aufweist.

Da die Schrauben für den Monteur unmittelbar zugänglich sind, kann der Monteur alle beliebigen Werkzeuge einsetzen, insbesondere einen Akkuschrauber oder einen Akku-betriebenen Schlagschrauber.

Bei einer besonders robusten Ausführungsform ist der flanschartig am Vorderende des Schlagzylinders ausgebildete Befestigungsabschnitt einteilig an der Schlagzylindervorderplatte ausgebildet, ist also z.B. an diesem einstückig angeformt.

Der Befestigungsabschnitt ist aus Gründen der Stabilität vorzugsweise an der Schlagzylindervorderplatte ausgebildet, kann aber auch radial außenseitig an der Zylindermantelfläche ausgebildet sind.

Der Befestigungsabschnitt kann bedarfsgerecht ausgebildet sein, so dass dieser z.B. einen Befestigungsrand oder Befestigungsflansch bildet, der sich am Vorderende des Schlagzylinders radial über die äußere Mantelfläche des Schlagzylinders und der Schlagzylindervorderplatte erstreckt und die Befestigungsebene zur Befestigung an dem Halteflansch mit den korrespondierenden Gewindelöchern bildet.

In dem Befestigungsabschnitt sind vorzugsweise mehre Durchgangslöcher korrespondieren zu den Gewindelöchern des Halteflansches in Einbaulage vorgesehen.

Besonders bevorzugt sind zwei oder drei diametral gegenüberliegende oder beabstandte Durchganslöcher in dem Befestigungsabschnitt vorgesehen.

Eine besonders einfach anpassbare und nachrüstbare Ausführungsform sieht die Ausbildung des Befestigungsabschnitts an einer Anschlussplatte vor, die zur Verbindung mit dem Schlagzylindervorderende ausgebildet ist. Diese Anschlussplatte definiert eine Plattenebne, die sich in Einbaulage vorzugsweise parallel versetzt von der Schlagzylindervorderplatte erstreckt, an welcher die Anschlussplatte z.B. mittels Schrauben befestigbar ist. Die durch die Anschlussplatte definierte Plattenebene erstreckt sich in Einbaulage somit quer zur Längsachse des Schlagzylinders (Schlagzylinderlängsachse) .

Bevorzugt entspricht die Größe der Anschlussplatte im Wesentlichen der Große der Schlagzylindervorderplatte, weist aber zusätzlich zu einem Verbindungsabschnitt zur Befestigung an dem Vorderende des Schlagzylinders oder der Schlagzylindervorderplatte den oder die über die vordere Schlagyzlindermantelfläche oder seitlich neben diesem angeordneten, radial abstehnenden Befestigungsabschnitt oder Befestigungsbereiche auf, welcher also zu Befestigung an der Halteplatte fungiert.

Die Anschlussplatte ist bevorzugt mit der Schlagzylindervorderplatte verschraubt und ragt also über den umfänglichen Außenrand der Schlagzylindervorderplatte zumindest mit dem oder den Befestigungsabschnitte(n) hinaus, welche die Durchgangslöcher aufweisen, in welche die Schrauben nun einfach von der Bedienerseite in den Halteflansch eingeschraubt werden können, also durch einen Monteur, der hinter der Schlagzylinderhinterplatte steht.

Vorzugsweise sind an den umfänglich sich über die vordere, äußere Projektionsfläche der Schlagzylindermantelfläche sich radial nach außen erstreckenden Befestigungsabschnitt mindestens zwei diametral gegenüberliegende Durchgangslöcher vorgesehen, durch welche Schrauben von der Nutzerseite her, also von hinten mit der in dem Halteflansch vorgesehenen korrespondierenden Gewindeöffnungen eingeschraubt werden können.

Die mindestens zwei Befestigungsabschnitte können erfindungsgemäß sowohl in einem durchgehenden Befestigungsbereiche ausgebildet sein, der die vordere Zylindermantelfläche flanschartig umfänglich einfasst und die mindestens zwei Durchgangslöcher aufweist.

Alternativ können die Befestigungsabschnitte sich nur abschnittsweise radial über die äußere Mantelfläche bzw. Projektionsfläche der Schlagzylindervorderplatte erstrecken, um so einzelne, voneinander umfänglich zueinander beabstandete Befestigungsabschnitte mit jeweils einer diesem zugeordneten Durchgangslöcher vorzusehen.

Aufgrund der auftretenden dynamischen Belastungen ist die Verwendung von Zylinderkopfschrauben als Schrauben zur Befestigung des Schlagzylinders besonders zweckmäßig, weil der zylindrische Kopf mehr Material aufweist, die Kerbspannungen somit geringer sind und Zylinderkopfschrauben bevorzugt als Inbus oder Torx ausgebildet größere Drehmomente beim Schrauben vertragen können und langlebiger sind.

Vorzugweise sind die Bolzen somit als Zylinderkopfschrauben ausgebildet, die einen zylindrischen Schraubenschaft umfassend einen Schraubendurchmesser mit einem daran ausgebildeten Schraubengewinde sowie einen Zylinderkopf mit einen gegenüber dem Schraubendurchmesser vergrößerten Zylinderkopfdurchmesser umfassen.

Eine noch bessere Fixierung und ein besserer Halt insbesondere bei den auftretenden dynamischen Kräften lässt sich realisieren, wenn drei oder mehr Durchgangslöcher an dem einen Befestigungsabschnitt oder mehreren Befestigungsabschnitten vorgesehen. Besonders bevorzugt sind vier Durchgangslöcher an diametral gegenüberliegenden Ecken vorgesehen, sodass die Projektion Befestigungsbeschnitte in die Ebene ein Viereck bilden, welche die vordere Schlagzylindermantelfläche an vier Ecken einfasst.

Besonders einfach ist die Montage der Schlagzylinderhalteanordnung, wenn die Durchgangslochmantelflächen der Durchstecklöcher oder Durchgangslöcher seitlich in diese einmündende Eindrehführungen aufweisen. Diese umfassen den Durchgangslöchern zugeordnete Langlöcher in der Größe des Schraubenschafts oder etwas mehr, welche sich von einer an ein Durchgangloch angrenzenden Seite oder Kante des Befestigungsabschnitts bis zu dem angrenzenden Durchgangsloch erstrecken, also in das Durchgangsloch münden oder in diese übergehen. Durch diese Ausgestaltung können die Schrauben bereits in den Schraubenöffnungen des Halteflansches vormontiert werden, also teilweise eingeschraubt werden. Sodann kann der Schlagzylinder mit den Eingängen der Eindrehführungen in den Seiten des Befestigungsabschnitts an die korrespondierenden Schrauben angesetzt und sodann durch Drehung, wobei die Schraubenschafte in den Eindrehführungen geführt werden, in die Durchganglöcher überführt. Dabei hängt der Schlagzylinder bereits an dem Befestigungsabschnitt, so dass der Monteur den Schlagzylinder nicht mehr selber halten muss. Der so vorfixierte Schlagzylinder wird sodann durch Festdrehen der Schrauben endfixiert.

Besonders zweckmäßig ist die Ausbildung des Befestigungsabschnitts in der Form eine im Wesentlichen quadratischen Anschlussplatte, die eine Seitenlänge größer oder gleich dem Durchmesser des Vorderendes Schlagzylinders oder der an die Anschlussplatte angrenzenden Schlagzylindervorderplatte ist.

Wenn diese Quadratische Anschlussplatte mit ihrem Mittelpunkt der quadratischen Plattenfläche der Anschlussplatte koaxial erstreckend zur Schlagzylinderlängsachse an oder im Verhältnis zur Schlagzylindervorderplatte angeordnet oder ausgebildet ist, können die Durchgangslöcher in den über die Projektionsfläche eines Befestigungsbereichs (Bereich, an dem die Anschlussplatte an der Vorderseite des Schlagzylinders bzw. der Schlagzylindervorderplatte befestigt oder ausgebildet ist) des Schlagzylinders in der Stirnansicht überstehenden Bereichen der Platte ausgebildet sein, so dass an den die Projektionsfläche des Schlagzylinders in die Ebene vor dem Schlagzylinder der Befestigungsabschnitt vier die Schlagzylindermantelfläche überragende Ecken bildet, in denen Durchgangslöcher ausgebildet sind, die für den Monteur von hinten, also mit dem Monteur hinter Schlagzylinder stehend, direkt und sichtbar zugänglich sind.

Vorzugsweise ist der Befestigungsabschnitt also in Form einer Anschlussplatte ausgebildet, die mit der Schlagzylindervorderplatte verbindbar, insbesondere verschraubbar ist. Diese Anschlussplatte zeichnet sich dadurch aus, dass diese eine wesentlich geringere Dicke, die sich in Einbaulage entlang der Schlagzylinderlängsachse erstreckt, als Länge und Breite aufweist. Länge und Breite sind vorzugsweise gleich und sind vorzugsweise 5 bis 25 Prozent Länger als der Schlagzylinderdurchmesser am vorderen Anschlussende, an dem dieser mit der Anschlussplatte verbunden oder versehen ist.

Bei der Vormontage werden der Befestigungsabschnitt mit den Eindrehführungen seitlich gegen die Schraubenschafte gedreht, z.B. gegen den Uhrzeigersinn, sodass die Schrauben in den Eindrehführungen geführt werden bis diese in den am Ende der Eindrehführungen ausgebildeten Durchgangslöcher sitzen. Durch diese Ausbildung kann der Schlagzylinder sogar einhändig montiert werden durch Eindrehen des Schlagzylinders in die Vormontagestellung, in welcher die Schraubenschafte also in den Durchgangslöchern der Anschlussplatte sitzen. Sodann werden die Schrauben von dem Monteur angezogen, ohne den Schlagzylinder halten zu müssen. Das Halten erfolgt alleine durch die vorfixierten Befestigungsabschnitte.

Bei einer besonders bevorzugten Ausführungsform weisen die Eindrehführungen die Form eines Kreisbogensegments auf, wobei die Mittelachse des Kreisbogensegments auf einem Umkreis liegt, dessen Mittelpunkt in einer Befestigungsabschnittsmittelachse oder Anschlussplattendrehachse liegt. Die Befestigungsabschnittsmittelachse oder Anschlussplattendrehachse erstreckt sich in Einbaulage koaxial zur Schlagzylinderlängsachse des Schlagzylinders, sodass also die Eindrehführungen auf einem Kreisbogensegmentförmigen Bahn liegen, die sich um die Mittellängsachse und die Anschlussplattenlängsachse erstreckt. Durch diese Ausgestaltung der Kreisbogensegmentförmigen Rahmen kann ein selbstständiges Lösen der Anschlussplatte auch bei noch nicht angezogenen Zylinderkopfschrauben bewerkstelligt werden.

Die bevorzugte Ausführungsform umfasst mindestens drei oder vier voneinander beabstandete Durchgangslöcher an einem Befestigungsabschnitt oder mehreren Befestigungsabschnitten, wobei zwei Befestigungsabschnitte mit Eindrehführungen an diametral gegenüberliegende Durchgangslöcher ausgebildet sind und bei den beiden anderen diametral gegenüberliegenden Durchgangslöchern lediglich ein Befestigungsabschnitt einen seitlich in das korrespondierende Durchgangsloch mündende Eindrehführung vorgesehen ist und der andere Befestigungsabschnitt lediglich ein Durchgangsloch ohne seitlich einmündende Eindrehführung aufweist, so dass dieser zur Fixierung dient. Bei dieser Ausgestaltung sind die seitlich in die korrespondierenden Durchgangslöcher einmündenden Eindrehführungen ebenfalls vorzugsweise als Kreisbogensegmente mit dem Durchmesser korrespondierend zum Schraubenschaft der Schraube ausgebildet. Auf diese Weise kann besonders einfach die Vormontage durch Vormontieren der Schrauben in den Gewindeöffnungen des Halteflansches erfolgen. Sodann wird der Befestigungsabschnitt oder die Anschlussplatte mit den drei seitlich vorgesehenen Eindrehführungen eingedreht bis die Schraubenschafte in den endseitig an den Eindrehabführungen ausgebildeten Durchstecklöcher oder Anschlägen sitzen. Hierdurch hält durch die bogenförmig bzw. kreisbogensegmentförmige Ausbildung der Eindrehführungen der Schlagzylinder durch sein Eigengewicht in der Vormontagestellung. Eine Endfixierung kann bereits dadurch erfolgen, dass der Befestigungsabschnitt mit lediglich dem Durchgangsloch fest angezogen wird. Vorzugsweise werden sodann die restlichen Zylinderkopfschrauben endfixiert durch Anziehen.

Offenbart wird somit eine Anschlussplatte oder eine Adapterplatte an sich zur Befestigung eines Schlagzylinders an einem Halteflansch befestigt an einer Trägeranordnung.

In der abstraktesten Ausführungsform zeichnet sich die Anschlussplatte dadurch aus, dass diese eine Anschlussplattenebene definiert, welche an einem Anschlussabschnitt verbunden ist mit der Schlagzylindervorderplatte und über die Projektionsfläche der Schlagzylindervorderplatte auf eine Ebene vor dem Schlagzylinder seitlich hinausragt zur Bildung mindestens eines flanschartigen Befestigungsabschnitts, wobei es sich dabei um einen durchgehenden, den Schlagzylinder umschließenden Befestigungsrand oder Befestigungsflansch oder auch mehrere getrennte radial oder seitlich hinausragende Befestigungsbereiche oder Befestigungsvorsprünge handeln kann, die somit also entweder einen durchgehenden oder mehrere getrennt voneinander ausgebildete Befestigungsabschnitte bilden, in denen sich quer erstreckend zur Anschlussplattenebene Durchstecklöcher vorgesehen sind, durch welche Schraubenschafte von korrespondierenden Schrauben mit Gewinden hindurchsteckbar sind und sodann und mit korrespondierenden Innengewinden in Schraubenöffnungen eines in Einbaulage flächig an die Anschlussplatte anliegenden Halteflansches lösbar befestigbar sind.

Die Anschlussplatte bildet somit den flanschartigen Befestigungsabschnitt (Befestigungsflansch) mit den Durchstecklöchern oder Durchgangslöchern.

Besonders bevorzugt sind zumindest bei zwei, insbesondere bei drei Durchstecklöchern seitlich in diese mündende Eindrehführungen sowie einem Durchsteckloch keine seitliche einmündende Eindrehführung ausgebildet.

Vorzugsweise ist die Anschlussplatte als viereckige Platte mit einer Seitenlänge ausgebildet, die 5 bis 20 Prozent größer ist als der Schlagzylinderdurchmesser an dessen Vorderende, und diese weist in den so gebildeten vier Ecken vier Durchgangslöcher auf, von denen mindestens drei mit zugehörigen Eindrehführungen und eine nur als Durchgangslöcher ausgebildet ist.

Vorzugsweise weist diese Anschlussplatte eine Materialstärke von 15 bis 25 mm, insbesondere 20 mm auf und ist besonders bevorzugt aus Stahl.

Üblicherweise umfasst die Anschlussplatte in der Mitte des Verbindungsabschnitts eine Mittenöffnung für den Durchgang des Schlagbolzens, die besonders bevorzugt von Schraubenlöchern für die Verbindung der Anschlussplatte mit der Schlagzylindervorderplatte umfänglich umschlossen ist. Besonders bevorzugt werden zur Realisierung einer Planen Vorderfläche Senkkopfschrauben zur Verbindung der Anschlussplatte mit der Schlagzylindervorderplatte verwendet, die von vorne durch die Anschlussplatte in die Schlagzylindervorderplatte eingeschraubt werden und die anliegend an die Halteplatte gegen Lösen durch die dynamischen Kräfte gesichert sind.

Für den Fachmann versteht sich, dass die vorgeschlagene Anschlussplatte für jegliche Schlagzylinder eingesetzt werden kann, also für Schlagzylinder mit einem internen Druckluftspeicher, mit einem externen Druckluftspeicher. Ferner ist auch der konkrete Aufbau des Schlagzylinders für die Umsetzung der Erfindung nicht relevant. Es können somit Schlagzylinder eingesetzt werden, bei denen der in dem Zylinderraum relativ bewegliche Kolben durch eine Feder zurückgestellt wird und solche ohne Feder. Schließlich ist natürlich auch das eingesetzte Fluid für den Betrieb des Schlagzylinders und die Umsetzung der Erfindung nicht relevant. Das bevorzugte Fluid ist allerdings Druckluft.

Aufgrund der auftretenden dynamischen Belastung und zur Realisierung einer ausreichenden Dauerfestigkeit sind die Bauteile der Schlagzylinderanordnung vorzugsweise aus Stahl, teilweise sogar auch hochfestem Stahl gefertigt.

Die Trägerkörper sind vorzugsweise aus Metallwänden aufgebaute Strukturen, wie Kessel, Abzüge, Rauchgasreinigungsanlagen und dergleichen, an denen der Halteflansch befestigt ist, insbesondere festgeschweißt ist.

Weitere Einzelheiten, Vorteil und Merkmale der Erfindung lassen sich dem nachfolgenden Teil der Beschreibung entnehmen, in dem ein bevorzugtes Ausführungsbeispiel der erfindungsgemäßen Schlagzylinderanordnung näher erläutert ist. Alle hier gezeigten Merkmale seien einzeln und unabhängig von der konkreten Kombination in der Ausführungsform offenbart.

Es zeigen:
- Figur 1: eine Schlagzylinderanordnung aus dem Stand der Technik in der Rückansicht (Monteuransicht oder Betreiberansicht) ;
- Figur 2: eine isometrische Frontansicht der Schlagzylinderanordnung gemäß Figur 1 in der Frontansicht bei entferntem Trägerkörper;
- Figur 3: eine isometrische Rückansicht einer erfindungsgemäßen Schlagzylinderanordnung;
- Figur 4: eine vergrößerte isometrische Draufsicht auf das Schlagzylindervorderende gemäß der Schlagzylinderanordnung aus Figur 3;
- Figur 5: eine isometrische Frontansicht einer Anschlussplatte;
- Figur 6: eine Stirnansicht einer erfindungsgemäßen Schlagzylinderanordnung von hinten aus Benutzersicht;
- Figur 7: eine isometrische Frontansicht eines Schlagzylinders mit an der Vorderseite montierter Anschlussplatte;
- Figur 8: eine isometrische Ansicht des Montageablaufs/Wartungsablaufs an einem Schlagzylinder von hinten; und
- Figur 9: den Montageablauf/Wartungsablauf gemäß Figur 8 in der rückseitigen Stirnansicht; und
- Figur 10: eine Frontansicht der Anschlussplatte.

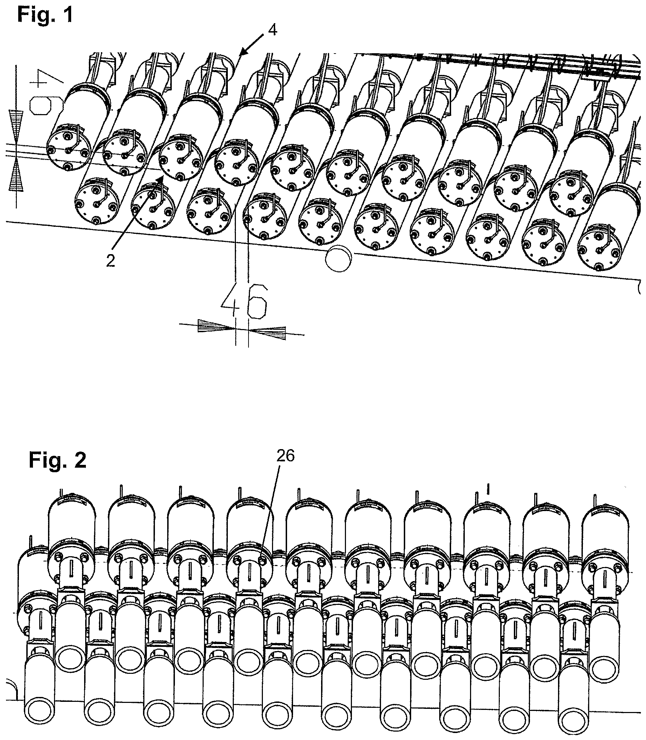

Figur 1 zeigt eine isometrische Ansicht von der Benutzerseite von hinten auf zwei Reihen von insgesamt zehn Schlagzylinderanordnungen je Reihe an einem Rauchgaskanal zur Bildung eines Schlagzylindergebildes.

Figur 2 zeigt die Ansicht der an dem Rauchgaskanal montierten Schlagzylinderanordnungen von der Seite des Rauchgaskanals her bei entfernter Wand, an welcher die Schlagzylinderanordnungen zur Bildung des Schlagzylindergebildes verschweißt sind.

Jede Schlagzylinderanordnung umfasst einen Schlagzylinder 2, der mit seinem Vorderende auf einem Halteflansch 4 verschraubt ist. Der Halteflansch 4 weist eine hohlzylindrisches Aufnahmerohr auf, welches mit seinem vorderen Stirnende an der Kesselwand befestigt ist. Jeder Schlagzylinder 2 umfasst einen hohlzylindrischen Kolbenmantel, der sich entlang einer Schlagzylinderlängsachse in Längsrichtung erstreckt und an einem Schlagzylindervorderende, welches in Einbaulage dem Halteflansch zugewandt ist, mit einer Schlagzylindervorderplatte verschlossen ist. Das dem Benutzer zugewandte hintere Ende des Kolbenmantels ist durch eine ebenfalls kreisrunde Schlagzylinderhinterplatte verschlossen. Bei der vorliegenden bevorzugten Ausführungsform entsprechen die radialen Außendurchmesser der Schlagzylindervorderplatte 23 und der Schlagzylinderhinterplatte dem Außendurchmesser des Kolbenmantels. Die Schlagzylindervorderplatte und Schlagzylinderhinterplatte schließen also eine Kolbenkammer innerhalb des Kolbenmantels ein, in der sich ein Kolben entlang der Schlagzylinderlängsachse bewegt und auf ein relativbeweglich in der Schlagzylindervorderplatte aufgenommenen Schlagbolzen bei einer Schlagauslösung aufschlägt. Der Kolben ist also innerhalb der Kolbenkammer entlang der Schlagzylinderlängsachse zwischen einer vorderen Schlagposition und einer hinteren Ruheposition relativbeweglich. Über einen Anschluss wird Druckluft dem Schlagzylinder 2 zugeführt und ein innerhalb des Schlagzylinder aufgenommenes Ventil regelt das abwechselnde Befüllen eines Druckluftspeichers und einer Schlagauslösung, bei welcher die in dem Druckluftspeicher aufgenommene Luft schlagartig in die Kolbenkammer entweicht und den Kolben zur Schlagauslösung nach vorne treibt gegen den in der Schlagzylindervorderplatte relativbewegt aufgenommenen Schlagbolzen.

In jeder Schlagzylindervorderplatte sind um die Schlagzylinderlängsachse herum vier sich parallel versetzt zur Schlagzylinderlängsachse erstreckende Gewindebolzen angeordnet, die in Einbaulage in entsprechende Durchgangslöcher an dem plattenförmigen Halteflansch 4 sitzen und auf der in der Figur 2 sichtbaren Rückseite des Halteflansches mit vier selbstkonternden Muttern an dem Halteflansch 4 montiert sind.

Insbesondere aus der Figur 1 ist gut ersichtlich, dass diese Muttern für den Monteur von der hinter dem Schlagzylinder gelegenen Montageseite her relativ schwer zugänglich sind, jedenfalls praktisch nicht sichtbar sind, sodass der Monteur die Muttern quasi blind Lösen und Anziehen muss.

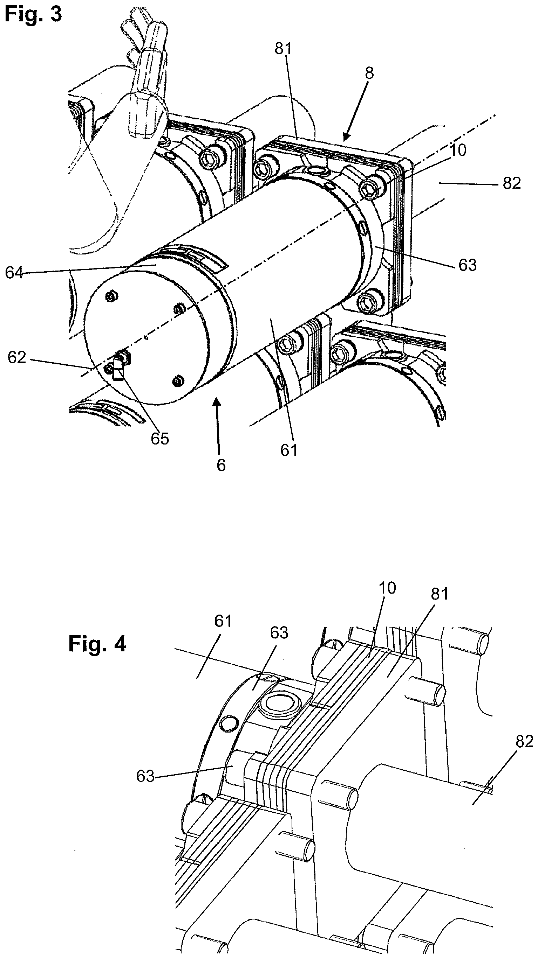

Figur 3 zeigt hingegen eine vergrößerte Ansicht einer erfindungsgemäßen Schlagzylinderanordnung, ebenfalls umfassend einen Schlagzylinder 6 sowie einen an einem nicht dargestellten Trägerkörper befestigten Halteflansch 8. Der Schlagzylinder 6 weist wiederum einen Kolbenmantel 61 auf, der sich entlang einer Schlagzylinderlängsachse 62 erstreckt und vorderseitig durch eine Schlagzylindervorderplatte 63 und hinterseitig durch eine Schlagzylinderhinterplatte 64 eingefasst ist, die also den von dem Kolbenmantel 61 umschlossenen Kolbenraum front- und rückseitig verschließen. Die Schlagzylindervorderplatte 63 und Schlagzylinderhinterplatte 64 entsprechen in ihrem Außendurchmesser wiederum dem Außendurchmesser des Kolbenmantels 61, sodass ein durchgängiger zylindrischer Körper gebildet wird, der an der Vorderseite an dem Halteflansch festgeschraubt ist und an dem hinterseitig über einen Anschluss 65 Druckluft zugeführt werden kann.

Der Halteflansch 8 umfasst eine Halteflanschplatte 81, an deren Vorderseite eine hohlzylindrische Führungshülse 82 mittig festgeschweißt ist und sich von der durch die Halteflanschpatte 81 definierten Ebene nach vorne zum Trägerkörper erstreckt und mit diesem verbunden ist.

Der in dem Schlagzylinder 6 relativbeweglich aufgenommene Ambos schlägt bei einem Schlag durch die Schlagzylindervorderplatte 63 auf einen in der Führungshülse 82 längsverschieblich aufgenommen Stößel, der dann seinerseits auf den Trägerkörper aufschlägt. Der genaue Aufbau ist nicht Gegenstand der Erfindung, jedoch sind die Halteflanschplatte 81 die Anschlussplatte 10 mittig mit entsprechenden Mittenöffnungen 84 ausgebildet, damit der Stößel sich durch diese beiden Bauteile hindurch in Einbaulage erstrecken kann.

Die isometrische vergrößerte Draufsicht der Schlagzylinderanordnung gemäß Figur 4 zeigt, wie diese Zylinderkopfschrauben 2 durch die Anschlussplatte 10 hindurch in die Halteflanschplatte 81 eingeschraubt sind und somit die Anschlussplatte 10 flächig auf der Halteflanschplatte 81 des Halteflansches 8 fixieren.

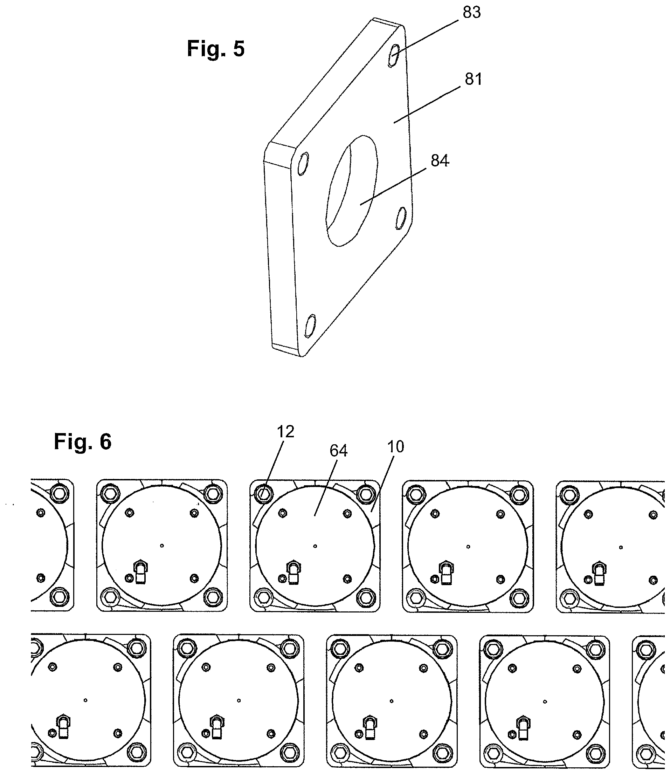

Figur 5 zeigt den geometrisch an die Halteplatte 10 angepassten Halteflansch 8 in einer isometrischen Ansicht von oben. Dieser ist ebenfalls als an die Größe der Anschlussplatte 10 angepasste viereckige Metallplatte, insbesondere Stahlplatte ausgebildet, die in den vier Ecken mit sich quer zu der durch die Anschlussplatte erstreckenden Gewindeöffnungen 83 oder versehen ist, also mit Löchern, in denen ein mit den Schrauben korrespondierendes Innengewinde vorgesehen ist. In diese Innengewinde können die vier Zylinderkopfschrauben 12 eingeschraubt werden, die jeweils einen zylindrischen Schraubenschaft mit einem Außengewinde sowie an einem Hinterende einen gegenüber diesem Schraubenschaft deutlich verbreiterten, zylindrischen Schraubenkopf mit einem Inbus aufweisen.

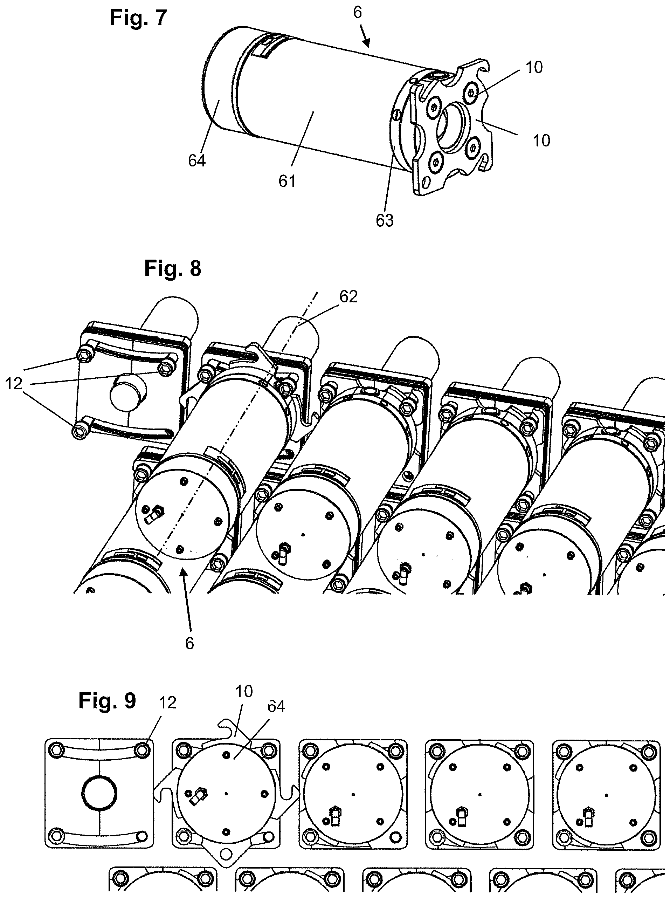

Wie insbesondere die isometrische Frontansicht in Figur 7 zeigt, kann die im Wesentlichen plattenförmige Anschlussplatte 10 über vier Schrauben, insbesondere Senkkopfschrauben auf der Schlagzylindervorderplatte 63 festgeschraubt sein.

Die genaue Montagereihenfolge oder Wartungsreihenfolge zum Montieren eines Schlagzylinders, also zum Zusammenbau einer Schlagzylinderanordnung ist in den Figuren 8 und 9 dargestellt.

### Montageschritt 1 (linke Seite):

Es werden die Distanzscheiben und Stößel montiert. Außerdem werden drei Zylinderkopfschrauben 12 eingeschraubt, vorzugsweise die beiden Oberen und eine Untere. Dabei werden die Zylinderkopfschrauben 12 nur soweit eingeschraubt, dass sie sicher halten und nicht herausfallen. Der Schraubenkopfabstand bis zur Distanzscheibe beträgt vorzugsweise mehr als 20 mm, also mehr als die Dicke der Anschlussplatte 10. Die letzte Zylinderkopfschraube 12 unten rechts wird absichtlich noch nicht montiert.

### Montageschritt 2:

Der Schlagzylinder 6 wird kurzzeitig in die Hand genommen, um 45° nach rechts gedreht und so über die Schraubenköpfe gehievt. Um nicht an die Schraubenköpfe zu stoßen, weist die Anschlussplatte 10 an den entsprechenden Stellen die halbkreisförmigen oder bogenförmigen Eindrehführungen 13 auf.

### Montageschritt 3:

Der Schlagzylinder 6 wird um 45° um die Schlagzylinderlängsachse 62 herum nach links gedreht. Die drei bogenförmigen Eindrehführungen 13(kreisförmige Langlöcher) werden nun über die Schraubenschäfte geschoben, wodurch sich der Schlagzylinder 6 einhakt. Nun kann der Monteur den Schlagzylinder 6 loslassen, da die Schraubenköpfe mit einem größeren Außendurchmesser als die Eindrehführungen 13 das Abrutschen wirksam verhindern.

### Montageschritt 4:

Die vierte Zylinderkopfschraube 12 wird eingeschraubt. Bereits allein diese verhindert ein Zurückdrehen und somit ein Lösen des Schlagzylinders 6. Diese muss nur handfest montiert werden.

### Montageschritt 5:

Alle vier Zylinderkopfschraube 12 werden nun maschinell bis zum Anschlag hineingeschraubt.

Damit ist die Montage oder Wartung abgeschlossen.

Die Zeit, die der Schlagzylinder 6 in den Händen gehalten werden muss, ist minimal im Vergleich zum Stand der Technik. Die Zylinderkopfschrauben 12 müssen nur wenig mit der Hand gedreht werden. Nach der ersten Umdrehung ist die jeweilige Zylinderkopfschraube 12 und der Schlagzylinder 6 gegen Herabfallen gesichert. Ein Akku-Schrauber mit üblichem Werkzeug kann das Verschrauben im Vergleich zum Stand der Technik schneller befestigen.

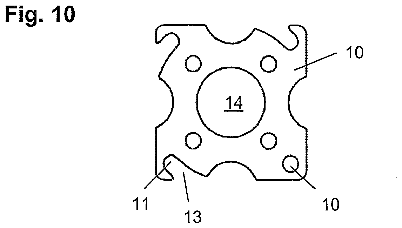

Figur 10 zeigt eine Frontansicht der Anschlussplatte 10. Diese umfasst demnach einen mittleren Bereich, die als Verbindungsabschnitt zur Verbindung mit der Schlagzylindervorderplatte 63 ausgebildet ist und einen flächigen Anlagebereich mit einer mittleren Durchgangslöcher für den Schlagbolzen aufweist und um die Schraubenlöcher 11 herum angeordnete sind je einer Absenkung zum Einsatz der Befestigungsschraube zur Montage der Anschlussplatte 10 an der Schlagzylindervorderplatte 63. Der mittige Verbindungsabschnitt zur ist von dem Befestigungsabschnitt umfänglich umschlossen, der vorliegend in der bevorzugten Ausführungsform als eine quadratische Anschlussplatte 10 ausgebildet ist mit gleichen Seitenlängen, wobei die Seitenlänge der Anschlussplatte 10 etwa 5 bis 20 Prozent größer ist als der Durchmesser des Schlagzylinders 6, um somit einen ausreichenden Überstandsbereich für den Befestigungsabschnitt bereitzustellen, wenn der Schlagzylinder 6 mit seiner Schlagzylindervorderplatte 63 mit der Anschlussplatte 10 verschraubt ist. Somit weist die Anschlussplatte 10 vorzugsweise in Einbaulage ein die äußere Mantelfläche der Schlagzylindervorderplatte 63 in Einbaulage umfänglich umschließenden Befestigungsabschnitt auf, der in jeder Ecke ein zugehöriges Durchgangsloch 11 aufweist. Das rechte, untere Durchgangsloch 11 ist allein als zylindrisches Durchgangsloch ausgebildet in den anderen vier Ecken sind die Durchgangslöcher 11 mit einer seitlich sich davon erstreckenden und zur angrenzenden Seite verlaufenden, bogenförmigen Eindrehführungen 13 ausgebildet, die sich also von etwa der Mitte einer angrenzenden Seite der Anschlussplatte 10 bis in die Durchgangslöcher 11 erstreckt, sodass somit ein in das Durchgangsloch 11 endendes Langloch gebildet wird. Diese Ausgestaltung ist an drei Ecken der Anschlussplatte 10 vorgesehen, nämlich an den in der Figur 10 beiden oberen Ecken sowie der linksseitig unteren Ecke. Schließlich kann in der Mitte des Verbindungsabschnitts ein Mittenöffnung 14 für den Durchgang des Schlagbolzens vorgesehen sein.

Zusammenfassend betrifft die Erfindung eine Schlagzylinderhalteanordnung mit einem an einem Halteflansch 8 mittels Bolzen befestigbaren Schlagzylinder 6. Die Bolzen sind als Schrauben ausgebildet und an einer Schlagzylindervorderplatte 63 ist ein über deren äußeren Umfangsbereich radial abstehender Befestigungsabschnitt vorgesehen, der eine Befestigungsebene zur Anlage gegen den Halteflansch 8 in Einbaulage bildet und mindestens zwei diametral gegenüberliegende Durchgangslöcher 11 aufweist, die sich quer zur Befestigungsebene erstrecken und zum Durchstecken des Schraubenschafts der Schrauben ausgebildet sind. Ferner ist der Halteflansch 8 zum Eindrehen der Schrauben ausgebildet.

### Bezugszeichenliste

- 2: Schlagzylinder
- 21: Kolbenmantel
- 22: Schlagzylinderlängsachse
- 23: Schlagzylindervorderplatte
- 24: Schlagzylinderhinterplatte
- 25: Anschluss
- 26: Gewindebolzen
- 4: Halteflansch
- 6: Schlagzylinder
- 61: Kolbenmantel
- 62: Schlagzylinderlängsachse
- 63: Schlagzylindervorderplatte
- 64: Schlagzylinderhinterplatte
- 65: Anschluss
- 8: Halteflansch
- 81: Halteflanschplatte
- 82: Führungshülse
- 83: Gewindeloch
- 84: Mittenöffnung
- 10: Anschlussplatte
- 11: Durchgangsloch
- 12: Zylinderkopfschraube
- 13: Eindrehführung
- 14: Mittenöffnung
- 15: Senkkopfschraube

## Patentansprüche

1. Schlagzylinderhalteanordnung umfassend
einen Schlagzylinder (6) mit
einer an einem Vorderende angeordneten Schlagzylindervorderplatte (63),
einem zylindrischen Kolbenmantel (61), der sich von dem Vorderende zu einem Hinterende erstreckt und eine innere Kolbenkammer umfänglich umschließt,
einem an dem Hinterende die Kolbenkammer verschließende, hintere Schlagzylinderhinterplatte (64),
einem in der Kolbenkammer angeordneten und entlang einer Längsachse längsverschieblich zwischen einer vorderen Schlagposition und einer hinteren Ruheposition relativbeweglichen Kolben,
einem in der Schlagzylindervorderplatte (63) relativbeweglich aufgenommenen Schlagbolzen, einer Schlagstange,
einen Amboss oder dergleichen,
einem Anschluss (65) zum Zuführen eines Fluids, insbesondere von Druckluft,
sowie einem Ventil zum wahlweisen Befüllen eines Druckluftspeichers und Betätigen des Kolbens für eine Schlagauslösung,
wobei an dem Schlagzylindervorderende Bolzen zur Befestigung an einem mit einem Trägerkörper, insbesondere eines Kessels oder dergleichen verbundenen Halteflansch (8) vorgesehen sind,
wobei die Bolzen als Schrauben ausgebildet sind, die einen Schraubenschaft, der ein Schraubengewinde aufweist, und einen Schraubenkopf, der ein gegenüber dem Schraubengewinde vergrößerten Schraubenkopfdurchmesser aufweist,
**DADURCH GEKENNZEICHNET,**
**DASS** an der Schlagzylindervorderplatte (63) oder einer mit dieser verbindbaren Anschlussplatte (10) ein über einen äußeren Umfangsbereich der Schlagzylindervorderplatte (63) radial abstehender Befestigungsabschnitt zur Bildung eines flanschartigen Befestigungsabschnitts vorgesehen ist, der eine Befestigungsebene zur Anlage gegen den Halteflansch (8) bildet
**DASS** in dem Befestigungsabschnitt mindestens zwei diametral gegenüberliegende Durchgangslöcher (11) ausgebildet sind, die sich quer zur Befestigungsebene erstrecken und zum Durchstecken des Schraubenschafts der Schrauben ausgebildet sind
**DASS** die Durchganglöcher (11) seitlich in diese einmündende Eindrehführungen (13) aufweisen
und **DASS** der Halteflansch (8) Gewindelöcher zum Eindrehen der Schrauben umfasst.

2. Schlagzylinderhalteanordnung nach Anspruch 1,
**DADURCH GEKENNZEICHNET,**
**DASS** der Befestigungsabschnitt einteilig an der Schlagzylindervorderplatte (63) ausgebildet ist.

3. Schlagzylinderhalteanordnung nach Anspruch 1,
**DADURCH GEKENNZEICHNET,**
**DASS** der Befestigungsabschnitt an einer Anschlussplatte (10) ausgebildet ist, die mit der Schlagzylindervorderplatte (63) verbindbar oder verbunden ist.

4. Schlagzylinderhalteanordnung nach einem der vorhergehenden Ansprüche,
**DADURCH GEKENNZEICHNET,**
**dass** der Befestigungsabschnitt als durchgehender Befestigungsrand oder Befestigungsflansch ausbildet ist, der sich am Vorderende des Schlagzylinders radial über die äußere Mantelfläche des Schlagzylinders (6) und der Schlagzylindervorderplatte (63) erstreckt.

5. Schlagzylinderhalteanordnung nach einem der vorhergehenden Ansprüche,
**DADURCH GEKENNZEICHNET,**
**DASS** der Befestigungsabschnitt mindestens zwei, diametral gegenüberliegende und getrennt voneinander sich über die Projektionsfläche der Schlagzylinders in der Stirnansicht Befestigungsbereiche aufweist, die radial über die Schlagzylindermantelfläche hinausragen.

6. Schlagzylinderhalteanordnung nach einem der vorhergehenden Ansprüche,
**DADURCH GEKENNZEICHNET,**
**dass** die Schrauben als Zylinderkopfschrauben (12) ausgebildet sind.

7. Schlagzylinderhalteanordnung nach einem der vorhergehenden Ansprüche,
**DADURCH GEKENNZEICHNET,**
**dass** der Halteflansch (8) Gewindelöcher (83) aufweist, die komplementär ausgebildet sind zu Schrauben.

8. Montage- und/oder Wartungsverfahren für die lösbare Befestigung eines Schlagzylinders (6) an einem Halteflansch (8) eines Trägerkörpers mittels Schrauben,
**DADURCH GEKENNZEICHNET,**
**dass** der Halteflansch (8) zu den Schrauben komplementäre Gewindelöcher (83) aufweist,
**dass** an einer Schlagzylindervorderplatte (63) oder einer mit dieser verbindbaren oder verbundenen Anschlussplatte (10) ein über einen äußeren Umfangsbereich der Schlagzylindervorderplatte (63) radial abstehender, flanschartiger Befestigungsabschnitt (Befestigungsflansch) vorgesehen ist,
der eine Befestigungsebene zur Anlage gegen den Halteflansch (8) bildet und mindestens zwei diametral gegenüberliegende Durchgangslöcher (11) aufweist, die sich quer zur Befestigungsebene erstrecken und zum Durchstecken eines Schraubenschafts der Schrauben ausgebildet sind,
**dass** zumindest zwei der Durchganglöcher (11) seitlich in diese einmündende Eindrehführungen (13) aufweisen,
**dass** die Schrauben zunächst in korrespondierende Gewindelöcher (83) des Halteflansches (8) eingedreht oder gelöst werden,
**dass** sodann der Schlagzylinder (6) gegriffen oder angesetzt wird,
**dass** sodann der Schlagzylinder (6) in einer Befestigungsrichtung oder Löserichtung gedreht wird,
und **dass** schließlich die Schrauben zur Endfixierung angezogen werden oder der Schlagzylinder (6) entnommen und ein anderer Schlagzylinder eingesetzt wird.

## Claims

1. Impact cylinder holding arrangement
comprising an impact cylinder (6) with an impact cylinder front plate (63) arranged at a front end,
a cylindrical piston skirt (61) extending from the front end to a rear end and circumferentially surrounding an internal piston chamber,
an impact cylinder rear plate (64) closing the piston chamber at the rear end,
a piston arranged in the piston chamber and longitudinally movable along a longitudinal axis between a forward stroke position and a rearward rest position,
a firing pin relatively movably arranged in the impact cylinder front plate (63), a firing rod, an anvil or the like,
a connection (65) for supplying a fluid, in particular compressed air,
as well as a valve for optionally filling of a pressurized air reservoir and actuating the piston for an impact release,
wherein at the front end of the impact cylinder bolts are provided for fastening to a holding flange (8) connected to a to a support body, in particular a boiler or the like,
wherein the bolts are being in the form of screws having a screw shank with a screw thread and a screw head with a screw head diameter larger than the screw thread,
**CHARACTERISED IN**
**THAT** on the impact cylinder front plate (63) or on a connecting plate (10) which can be connected thereto, a fastening portion radially extending over an outer circumferential region of the impact cylinder front plate (63) is provided for creating a flange-like mounting portion which forms a mounting plane for abutment against the holding flange (8),
**THAT** in the mounting portion at least two diametrically opposite through-holes (11) are formed which extend transversely to the fastening plane and are designed for the screw shank of the screws to be inserted through them,
**THAT** the through-holes (11) comprise rotating guides (13) laterally leading into them
and **THAT** the holding flange (8) comprises threaded holes for screwing in the screws.

2. Impact cylinder retaining arrangement according to claim 1,
**CHARACTERISED IN**
**THAT** the fastening portion is integrally formed on the impact cylinder front plate (63).

3. Impact cylinder retainer arrangement according to claim 1,
**CHARACTERISED IN**
**THAT** the fastening portion is provided on a connecting plate (10) which is connectable or connected to the impact cylinder front plate (63).

4. Impact cylinder retaining arrangement according to one of the preceding claims,
**CHARACTERISED IN**
**THAT** the fastening portion is formed as a continuous fastening edge or fastening flange which extends radially at the front end of the impact cylinder beyond the outer lateral surface of the impact cylinder (6) and the Impact cylinder front plate (63) .

5. Impact cylinder retaining arrangement according to one of the preceding claims,
**CHARACTERISED IN**
**THAT** the fastening portion comprises at least two fastening areas, extending diametrically opposite of one another and separately radially beyond the projection surface of the impact cylinder in the frontal view.

6. Impact cylinder retaining arrangement according to one of the preceding claims,
**CHARACTERISED IN**
**THAT** the screws are designed as cylinder head (12) screws.

7. Impact cylinder retaining arrangement according to one of the preceding claims,
**CHARACTERISED IN**
**THAT** the holding flange (8) comprises threaded holes (83) which are complementary to the screws.

8. Mounting and/or maintenance method for detachably fastening of an impact cylinder (6) to a holding flange (8) of a support body by means of bolts,
**CHARACTERISED IN**
**THAT** the holding flange (8) comprises threaded holes (83) complementary to the screws,
**THAT** on an impact cylinder front plate (63) or on a connecting plate (10) connectable or connected to it a flange-like fastening portion (fastening flange) is provided projecting radially over an outer circumferential area of the impact cylinder,
which forms a mounting plane for abutment against the holding flange (8) and comprises at least two diametrically opposed through-holes (11), which extend transversely to the fastening plane and are designed for insertion of a screw shank of the screws, that at least two of the through-holes (11) comprise rotating guides (13) laterally extending into them,
**THAT** the screws are first screwed into or loosened from corresponding threaded holes (83) of the retaining flange (8),
**THAT** the impact cylinder (6) is then gripped or applied,
**THAT** the impact cylinder (6) is then rotated in a fastening or loosening direction,
and **THAT** finally for final fixing the screws are tightened or the impact cylinder (6) is removed and another impact cylinder is inserted.

## Revendications

1. Ensemble de maintien de cylindre de percussion comprenant
un cylindre de percussion (6) présentant
une plaque de cylindre de percussion (63) avant disposée à une extrémité avant,
une enveloppe de piston (61) cylindrique qui s'étend de l'extrémité avant à une extrémité arrière et qui entoure circonférentiellement une chambre à piston intérieure,
une plaque de cylindre de percussion (64) arrière refermant la chambre à piston à l'extrémité arrière,
un piston disposé dans la chambre à piston et mobile longitudinalement le long d'un axe longitudinal entre une position de percussion avant et une position de repos arrière,
un percuteur, une barre de percussion, une enclume ou similaire, logé(e) de façon mobile dans la plaque de cylindre de percussion (63) avant,
un raccord (65) d'alimentation en fluide, en particulier en air comprimé,
ainsi qu'une valve destinée à sélectivement remplir un réservoir d'air comprimé et actionner le piston pour le déclenchement d'une percussion,
des boulons étant prévus à l'extrémité avant du cylindre de percussion pour la fixation à une bride de maintien (8) reliée à un corps de support, en particulier à une chaudière ou similaire,
les boulons étant réalisés sous forme de vis qui présentent une tige de vis, pourvue d'un filet de vis, et une tête de vis ayant un diamètre de tête de vis agrandi par rapport au filet de vis,
**caractérisé en ce que**
sur la plaque de cylindre de percussion (63) avant ou sur une plaque de raccordement (10) susceptible d'être reliée à celle-ci, il est prévu une partie de fixation dépassant radialement d'une zone périphérique extérieure de la plaque de cylindre de percussion (63) avant pour former une partie de fixation en forme de bride, qui constitue un plan de fixation pour l'appui contre la bride de maintien (8),
**en ce qu'**au moins deux trous de passage (11) diamétralement opposés sont ménagés dans la partie de fixation, qui s'étendent transversalement au plan de fixation et qui sont conçus pour le passage de la tige des vis,
**en ce que** les trous de passage (11) présentent des guides de vissage (13) débouchant latéralement dans ceux-ci, et
**en ce que** la bride de maintien (8) comprend des trous taraudés pour le vissage des vis.

2. Ensemble de maintien de cylindre à percussion selon la revendication 1, **caractérisé en ce que**
la partie de fixation est réalisée d'une seule pièce sur la plaque de cylindre de percussion (63) avant.

3. Ensemble de maintien de cylindre de percussion selon la revendication 1, **caractérisé en ce que**
la partie de fixation est réalisée sur une plaque de raccordement (10) qui peut être raccordée ou est raccordée à la plaque de cylindre de percussion (63) avant.

4. Ensemble de maintien de cylindre de percussion selon l'une des revendications précédentes,
**caractérisé en ce que**
la partie de fixation est réalisée sous forme de bord de fixation ou de bride de fixation continu(e) qui, à l'extrémité avant du cylindre de percussion, s'étend radialement sur la surface enveloppe extérieure du cylindre de percussion (6) et la plaque de cylindre de percussion (63) avant.

5. Ensemble de maintien de cylindre de percussion selon l'une des revendications précédentes,
**caractérisé en ce que**
la partie de fixation présente au moins deux zones de fixation diamétralement opposées, s'étendant séparément sur la surface de projection du cylindre de percussion, en vue frontale, qui dépassent radialement au-delà de la surface enveloppe du cylindre de percussion.

6. Ensemble de maintien de cylindre de percussion selon l'une des revendications précédentes,
**caractérisé en ce que**
les vis sont réalisées sous forme de vis à tête cylindrique (12).

7. Ensemble de maintien de cylindre de percussion selon l'une des revendications précédentes,
**caractérisé en ce que**
la bride de maintien (8) présente des trous taraudés (83) qui sont complémentaires aux vis.

8. Procédé de montage et/ou de maintenance pour la fixation amovible d'un cylindre de percussion (6) sur une bride de maintien (8) d'un corps de support au moyen de vis,
**caractérisé en ce que**
la bride de maintien (8) présente des trous taraudés (83) complémentaires aux vis,
**en ce que** sur une plaque de cylindre de percussion (63) avant ou sur une plaque de raccordement (10) reliée ou pouvant être reliée à celle-ci, il est prévu une partie de fixation en forme de bride (bride de fixation) dépassant radialement d'une zone périphérique extérieure de la plaque de cylindre de percussion (63) avant, qui forme un plan de fixation pour l'appui contre la bride de maintien (8) et qui présente au moins deux trous de passage (11) diamétralement opposés, qui s'étendent transversalement au plan de fixation et sont conçus pour le passage d'une tige des vis,
**en ce qu'**au moins deux des trous de passage (11) présentent des guides de vissage (13) débouchant latéralement dans ceux-ci,
**en ce que** les vis sont d'abord vissées ou desserrées dans des trous taraudés (83) correspondants de la bride de maintien (8),
**en ce que** le cylindre de percussion (6) est ensuite saisi ou appliqué,
**en ce que** le cylindre de percussion (6) est ensuite tourné dans un sens de fixation ou dans un sens de desserrage,
et **en ce que** les vis sont finalement serrées pour la fixation finale, ou le cylindre de percussion (6) est retiré et un autre cylindre de percussion est mis en place.
